# EUROPÄISCHE PATENTSCHRIFT

(11) **EP 1 266 948 B1**
(45) Veröffentlichungstag und Bekanntmachung des Hinweises auf die Patenterteilung: **14.07.2004**
(21) Anmeldenummer: 02008243.4
(22) Anmeldetag: 18.04.2002
(51) Int. Cl.: C09J 183/07, C08L 83/07

(54) **Selbsthaftende durch erwärmen vernetzbare 1-Komponenten Siliconzusammensetzungen**
Self adhesive heat curable 1-component silicone compositions
Compositions de silicone thermodurcissable à un composant

(30) Priorität: 31.05.2001 DE 10126563
(43) Veröffentlichungstag der Anmeldung: 18.12.2002
(73) Patentinhaber: Wacker-Chemie GmbH, 81737 München (DE)
(72) Erfinder: Reitmeier, Rudolf, Dr., 84489 Burghausen (DE); Müller, Philipp, Dr., 84489 Burghausen (DE); Vogl, Günter, 84503 Altötting (DE); Winter, Hans-Jörg, Dr., 84489 Burghausen (DE)
(74) Vertreter: Fritz, Helmut, Dr.

(56) Entgegenhaltungen:
- EP-A- 1 085 053
- EP-A- 1 106 662
- US-A- 5 658 674

## Beschreibung

Die Erfindung betrifft selbsthaftende durch Erwarmen vernetzbare 1-Komponenten Siliconzusammensetzungen mit hoher Lagerstabilität sowie daraus erhältliche Siliconelastomere und deren Einsatz für Verbund-Formteile.

Bekanntermaßen ist die Haftung vernetzter Siliconelastomere auf zahlreichen Substraten, wie Kunststoffen, Metallen und Gläsern, gering, d.h., wird eine additionsvernetzende Siliconelastomermasse auf ein Substrat aufgebracht und anschließend vernetzt, kann das entstandene Siliconelastomer in der Regel problemlos, d.h. durch Anwendung geringer Zugkräfte, von der Substratoberfläche abgezogen werden; häufig wird sogar eine spontane Ablösung des Siliconelastomers vom Substrat festgestellt. Da in zahlreichen Anwendungen jedoch eine feste und dauerhafte Substrathaftung des Siliconelastomers von entscheidender Bedeutung ist, wurde eine Vielzahl spezieller Maßnahmen vorgeschlagen, um eine feste Verbindung zwischen Substrat und Siliconelastomer zu erzielen.

Grundsätzlich kann die Haftfestigkeit des Siliconelastomer-Substrat-Verbundes erhöht werden, indem die chemische und/oder physikalische Beschaffenheit des Substrates bzw. der Substratoberfläche vor dem Aufbringen der vernetzenden Siliconelastomerzusammensetzung in geeigneter Weise verändert wird. Dies kann beispielsweise erfolgen durch Vorbehandlung der Substratoberfläche mit haftvermittelnden Additiven (sogenannten Primern), durch Plasmabehandlung der Substratoberflache, durch Einmischen spezieller Zusätze in das Substrat, durch gezielte Einstellung der Morphologie des Substrates, durch Erhöhung der Oberflächenrauhigkeit etc. Diese Maßnahmen haben u.a. den Nachteil, dass zusätzliche Verfahrensschritte erforderlich werden oder spezielle Anforderungen an die Beschaffenheit des Substrates gestellt werden müssen.

Des weiteren kann bei hochtemperaturvernetzenden Systemen die Haftfestigkeit des Siliconelastomer-Substrat-Verbundes erhöht werden, indem die chemische und/oder physikalische Beschaffenheit der additionsvernetzenden Siliconelastomermasse gezielt verändert wird. Bekannt sind zahlreiche haftvermittelnde Additive, welche - der unvernetzten Siliconmasse beigemischt - eine Selbsthaftung des resultierenden Siliconelastomers auf diversen Substraten herbeiführen. Hierzu zahlen Verbindungen, die hochreaktive funktionelle Gruppen, wie Alkoxy, Epoxy, Carboxy, Amino etc., enthalten, wobei diese Gruppen zumeist so ausgewählt werden, dass der Haftvermittler sowohl mit dem Substrat als auch mit einem Siliconelastomerbestandteil zu reagieren vermag. Zwar kann durch derartige Haftvermittler auf eine Vorbehandlung des Substrates evtl. verzichtet werden, doch entspricht die erzielte Haftfestigkeit häufig nicht den gestellten Anforderungen. Auch ist eine Steigerung der Haftfestigkeit durch höhere Gehalte an diesen Haftvermittlern nur bedingt möglich, da sich die in ihm enthaltenen hochreaktiven Gruppen dann zunehmend nachteilig auf die Gebrauchseigenschaften, wie Lagerstabilität, Vernetzungscharakteristik (Inhibierung), toxikologische Unbedenklichkeit etc., auswirken; man ist aus diesen Gründen vielmehr daran interessiert, den Gehalt an Haftvermittlern so niedrig wie möglich zu halten.

EP-A-686 671 beschreibt eine selbsthaftende additionsvernetzende Masse, die ohne speziellen Haftvermittler auskommt, da der haftvermittelnde Bestandteil entweder ein Organohydrogenpolysiloxan ist, welches durchschnittlich pro Molekül mindestens zwei SiH-Gruppen besitzt und dessen monovalente Si-gebundene Reste zu mindestens 12 Mol.-% aus Kohlenwasserstoffresten mit einem aromatischen Ring bestehen, oder eine solche Verbindung ist, die durchschnittlich pro Molekül mindestens eine SiH-Gruppe besitzt und die eine Gruppe bestehend aus zwei aromatischen Ringen enthält, wobei die beiden aromatischen Ringe durch -R¹³R¹⁴Si-, -R¹³R¹⁴SiO-, - OR¹³R¹⁴SiO- oder -R¹³R¹⁴SiOR¹³R¹⁴Si- voneinander getrennt sind und die Reste R^{**13**} und R^{**14**} einwertige Kohlenwasserstoffreste darstellen. Der haftvermittelnde Bestandteil kann also zugleich der Vernetzer der Siliconelastomermasse sein. Mit dieser Zusammensetzung wird eine gute Haftung auf organischen Kunststoffen (vor allem ABS) erzielt, während gleichzeitig auf eine leichte Entformbarkeit aus der metallenen Vulkanisationsform (Chrom- oder Nickel-beschichtete Stahlform bzw. Form aus einer Aluminiumlegierung) hingewiesen wird. Der hohe Gehalt an aromatische Ringe enthaltenden Resten in dem SiH-haltigen, haftvermittelnden Bestandteil von > 12 Mol.-% bedingt jedoch eine erhebliche Unverträglichkeit mit den übrigen Bestandteilen der additionsvernetzenden Siliconelastomermasse. Dies führt einerseits zu einerteilweisen Entmischung (Ausschwitzen) während der Lagerung, was ein wiederholtes Homogenisieren der diesen Bestandteil enthaltenden Komponente vor Gebrauch erforderlich macht. Diese Unverträglichkeit, die sich bereits an einer milchigen Trübung der unvernetzten Masse zeigt, manifestiert sich auch in einer deutlich verminderten Transparenz der daraus hergestellten Siliconelastomerteile. Fungiert der haftvermittelnde Bestandteil zugleich als Vernetzer der Siliconelastomerzusammensetzung, fuhrt die Unverträglichkeit zu Vulkanisationsstörungen, die zu inhomogener Netzwerkbildung und mangelhaften mechanischen Vulkanisateigenschaften führen. Um diese Vulkanisationsstörungen zu umgehen, muß zusätzlich zum haftvermittelnden SiH-haltigen Bestandteil ein mit der Siliconelastomermasse vollständig verträglicher SiH-haltiger Vernetzer eingesetzt werden, was allerdings andere Nachteile (z.B. erhöhte Werte des Druckverformungsrestes; erhöhte Ausschwitztendenz des haftvermittelnden Bestandteils) zur Folge hat. Der hohe Gehalt an aromatische Ringe enthaltenden Resten in dem SiH-haltigen, haftvermittelnden Bestandteil von > 12 Mol.-% verursacht auch eine erhebliche Strukturviskosität und Thixotropie der Siliconelastomermasse, die in zahlreichen Anwendungen (z.B. Spritzguß von Flüssigsiliconkautschuk) unerwünscht ist. Ausserdem ist die dort beschriebene Siliconmischung nur sehr begrenzt lagerstabil, so dass die Dosierung des Platinkatalysators, bzw. Vermischung mit der H-Siloxankomponente nur wenige Minuten bis Stunden vor der Vulskanisation vorgenommen werden kann. Schließlich ist auch die Haftung dieser Zusammensetzung auf Metallen unzureichend.

EP-A-875 536 beschreibt eine selbsthaftende additionsvernetzende Siliconkautschukmischung, die sich dadurch auszeichnet, dass
a) der SiH-Vernetzer mindestens 20 SiH-Gruppen enthält (übrige Reste sind aliphatisch gesättigt),
b) ein epoxyfunktionelles Alkoxysilan und/oder Alkoxysiloxan enthalten ist,
c) optional ein Peroxid.

Besonders bevorzugt ist dabei die Verwendung des Glycidyloxypropyltrimethoxysilans (Glymo). Die in EP-A-875 536 beschriebene Siliconkautschukmischung eignet sich besonders zur Herstellung von Verbundformteilen, die aus dem Siliconelastomer und einem organischen Kunststoff bestehen. Die in EP-A-875 536 beschriebene Zusammensetzung weist jedoch den Nachteil auf, dass nur bei Verwendung sehr SiH-reicher Vernetzer, mit durchschnittlich mindestens 20 SiH-Gruppen pro Molekül, eine ausreichende Haftfestigkeit erzielt werden kann. In den dortigen Beispielen werden Vernetzer mit 30 SiH-Gruppen je Molekül verwendet. Die Verwendung derart hochfunktioneller Vernetzer vermindert die Lagerstabilität additionsvernetzender Siliconkautschukmischungen erheblich, d.h. die Fließfähigkeit wird massiv beeinträchtigt, was bis zur Verstrammung der Masse führen kann, wodurch eine ordnungsgemäße Verarbeitung der Masse, z.B. im Spritzguß, nicht mehr möglich ist. Zudem müssen, um eine hohe Haftfestigkeit zu erzielen, relativ hohe Mengen an epoxyfunktionellem Alkoxysilan/-siloxan eingesetzt werden, wodurch die Vernetzungsgeschwindigkeit erheblich vermindert wird. Zwar kann dies teilweise durch Verwendung eines Peroxids, wie in EP-A-875 536 beschrieben, kompensiert werden, doch kommen hierfür wegen der notwendigerweise niedrigen Vernetzungstemperatur (Erweichung des organischen Kunststoffes) nur Peroxide mit niedriger Anspringtemperatur, wie das beschriebene 2,4-Dichlorbenzoylperoxid, in Frage, die zum einen wegen der freigesetzten Spalt- und Folgeprodukte toxikologisch sehr bedenklich sind (PCB-Problematik), zum anderen die Lagerstabilität der Masse weiter verschlechtern. Ausserdem sind diese Mischungen wiederum nur relativ kurze Zeit lagerfähig mit Topfzeiten im Minutenbereich, so dass daraus keine 1-Komponenten Produkte für Verarbeitungen bei Composite Herstellern zur Verfugung gestellt werden können, sondern nur 2-Komponenten- bzw. A/B-Systeme.

Das 2-Komponenten-System bei additionsvernetzenden Siliconmassen ist aber mit zahlreichen Nachteilen verbunden, wie etwa aufwendige Logistik, die hohe Kontaminationsgefahr insbesondere der Platinkomponente bzw. von A/B-Komponenten untereinander, so dass bereits Teilvernetzung bei der Lagerung auftritt. Ausserden ist hier ein zusätzlicher Mischschritt von A- und B-Komponenten notwendig, der zu einem sehr empfindlichen Intermediat führt. Dies macht einerseits eine sich rasch anschliessende Verarbeitung erforderlich, andererseits auch ein häufiges Reinigen der Dosieranlagen, Vermischungs- und Verarbeitungsmaschinen etc., da das durch Rückvermischung oder Wandhaftung verbliebene Material relativ schnell vergelt.

Zusammenfassend kann festgestellt werden, daß keine der herkömmlichen additionsvernetzenden Siliconelastomerzusammensetzungen in befriedigender Weise den Anforderungen gerecht wird, die an eine selbsthaftende Siliconelastomermasse, welche insbesondere zur Herstellung von Verbundformteilen oder zum Verguß elektrischer/elektronischer Teile Verwendung finden soll, gestellt werden, nämlich:
a) gute Verarbeitbarkeit und Lagerstabilität
b) hohe Vernetzungsgeschwindigkeit bei relativ niedrigen Temperaturen
c) hohe Haftfestigkeit auf organischen Kunststoffen, Metallen und Gläsern
d) leichte Entformbarkeit aus Vulkanisationsformen
e) toxikologische Unbedenklichkeit
f) hohes Niveau der Gebrauchseigenschaften (Transparenz, Nichtkorrosivitat, gutes mechanisches und/oder elektrisches Eigenschaftsprofil)

In US-A-5,658,674 sind kalt vulkanisierbare Siliconzusammensetzungen beschrieben, die alkenylfunktionelles Diorganopolysiloxan, Füllstoff, Organohydrogenpolysiloxan, Vinyl- oder Epoxysilanhaftvermittler, sowie Platinkatalysator enthalten.

EP-A-1 041 117 beschreibt eine gut haftende additionsvernetzbare 1-Komponenten Siliconelastomerzusammensetzung, die ein Organopolysiloxan mit sowohl SiH- als auch Alkenylgruppen und eine Verbindung mit sowohl Alkenyl- als auch Hydroxyphenylgruppen im gleichen Molekül enthält. Die Herstellung derartiger Siliconelastomerzusammensetzungen ist sehr kompliziert und daher nicht wirtschaftlich. Ausserdem ist auch diese 1-Komponentenmischung nicht lagerstabil, sondern muss nach Zugabe der beschriebenen Patinkatalysatoren schnell verarbeitet werden. Sie hat also auch Nachteile bei Logistik und Reinigung wie A/B-Systeme.

In beispielsweise EP-A-1 045 006 ist die Verbesserung der Haftung bei hochviskosen, peroxidisch vernetzbaren Siliconelastomermassen (HTV) beschrieben. Dort werden Silatran-Derivate z.B. aus 2-Hydroxy-ethylamin + Methyltrimethoxy-silan + Allylglycidylether zur Siliconkautschukmischung gegeben, um bei der Vulkanisation eine gute Haftung auf organischen Harzen, wie PBT, FPP zu erhalten. Solche Zusätze sind aber toxikologisch bedenklich, sowohl bei der betrieblichen Einarbeitung, als auch bei der Verbundherstellung und - anwendung, da sie aggressive Spaltprodukte abgeben können.

Es bestand daher die Aufgabe, eine auf organischen Kunststoffen, Metallen und Gläsern gut selbsthaftende durch Erwarmen vernetzbare 1-Komponenten Siliconelastomermasse bereitzustellen, die obige Nachteile nicht aufweist bzw. dem voranstehenden Anforderungsprofil gerecht wird.

Gegenstand der Erfindung sind selbsthaftende durch Erwärmen vernetzbare 1-Komponenten Siliconzusammensetzungen, die
(A) Diorganopolysiloxan der allgemeinen Formel (1)

   R¹ ₐR² _{b}SiO_{(4-a-b)/2} (1),

   in der
   - **R**^{**1**}: Hydroxylrest oder einen monovalenten, gegebenenfalls halogensubstituierten, gegebenenfalls O-, N-, S-, oder P-Atome enthaltenden Kohlenwasserstoffrest mit 1 bis 20 Kohlenstoffatomen, der frei von aliphatisch ungesättigten Gruppen ist,
   - **R**^{**2**}: einen monovalenten, aliphatisch ungesättigten, gegebenenfalls halogensubstituierten, gegebenenfalls O-, N-, S-, oder P-Atome enthaltenden Kohlenwasserstoffrest mit 2 bis 10 Kohlenstoffatomen,
   - **b**: Werte von 0,003 bis 2 bedeuten, mit der Maßgabe, dass 1.5<(**a**+**b**)<3.0, dass pro Molekül durchschnittlich mindestens zwei aliphatisch ungesättigte Reste **R**^{**2**} enthalten sind und dass die bei 25°C bestimmte Viskosität des Diorganopolysiloxans (A) mindestens 100 Pa.s beträgt,
(B) Füllstoff, der ausgewählt wird aus Füllstoff (B1) mit einer spezifischen Oberfläche von mindestens 50 m²/g, Aluminiumhydroxid (B2) und deren Gemischen,
(C) Organohydrogenpolysiloxan der allgemeinen Formel (2)

   R³ _{c}R⁴ _{d}R⁵ ₑH_{f}SiO_{(4-c-d-2e-f)/2} (2),

   wobei
   - **R**^{**3**}: einen monovalenten aliphatisch gesättigten Kohlenwasserstoffrest mit 1 bis 20 Kohlenstoffatomen,
   - **R**^{**4**}: (a) einen gegebenenfalls halogensubstituierten monovalenten Kohlenwasserstoffrest mit 6 bis 15 Kohlenstoffatomen, welcher mindestens einen aromatischen C₆-Ring enthält, oder (b) einen halogensubstituierten, gegebenenfalls O-, N-, S-, oder P-Atome enthaltenden gesättigten monovalenten Kohlenwasserstoffrest mit 2 bis 20 Kohlenstoffatomen,
   - **R**^{**5**}: einen beidseitig Si-gebundenen bivalenten, gegebenenfalls halogensubstituierten, gegebenenfalls O-, N-, S-, oder PAtome enthaltenden Kohlenwasserstoffrest mit 6 bis 20 Kohlenstoffatomen und
   - **c, d, e** und **f**: positive Zahlen bedeuten, mit der Maßgabe, dass das Organohydrogenpolysiloxan (B) pro Molekül durchschnittlich 3 bis weniger als 20 SiH-Gruppen enthält, dass die Relationen: 0,05<100 (d+e)/(c+d+e+f)<12 erfüllt sind und dass die bei 25°C bestimmte Viskosität des Organohydrogenpolysiloxans (B) 1 mPa.s bis 100 Pa.s beträgt,
(D) Organosiliciumverbindung der allgemeinen Formel (3)

   R⁷ _{g}R⁸ ₕR⁹ ᵢSiO_{(4-g-h-i)/2} (3),

   und/oder deren Teilhydrolysate, wobei
   - **R**^{**7**}: einen Wasserstoff-, Hydroxyl- oder einen gegebenenfalls halogen- oder cyanosubstituierten, gegebenenfalls O-, N-, S-, oder P-Atome enthaltenden monovalenten gesättigten Kohlenwasserstoffrest mit 1 bis 20 Kohlenstoffatomen,
   - **R**^{**8**}: einen Vinylrest oder mindestens eine Epoxygruppe enthaltenden oder mit mindestens einer Acryloxy- oder Methacryloxygruppe substituierten, gegebenenfalls halogensubstituierte, gegebenenfalls O-, N-, S-, oder P-Atome enthaltenden monovalenten Kohlenwasserstoffrest mit 2 bis 20 Kohlenstoffatomen,
   - **R**^{**9**}: einen über eine Si-O-C-, Si-O-N- oder Si-N-Verknüpfung an Si gebundenen hydrolysierbaren monovalenten gegebenenfalls halogensubstituierten, gegebenenfalls O-, N-, S-, oder P-Atome enthaltenden Kohlenwasserstoffrest mit 1 bis 20 Kohlenstoffatomen, mit der Maßgabe, dass gilt, 4>**g**≥0, 4>**h**>0, 4>**i**>0, 4≥(**h+i**)>0 und 4≥(**g+h+i**), und
(E) Hydrosilylierungskatalysator oder Peroxidvernetzer enthalten,
wobei die bei 25°C nach DIN 53523 Teil 3 bestimmte Mooney-Viskosität der Siliconzusammensetzungen 20 bis 200 beträgt.

In den Siliconzusammensetzungen fungiert Organohydrogenpolysiloxan (C) als Haftvermittler und bei additionsvernetzbaren Siliconzusammensetzungen zugleich als Vernetzer.

Die vorteilhaften Eigenschaften der Siliconzusammensetzungen bestehen darin, dass die Selbsthaftung nach der Vulkanisation durch einen in jeder additionsvernetzenden Masse enthaltenen Bestandteil, nämlich den SiH-haltigen Vernetzer (C), in Kombination mit der epoxy-, acryloxy-, methacryloxy- und/oder vinylfunktionelle und hydrolysierbare Reste aufweisenden Organosiliciumverbindung (D), erzielt wird, wobei der SiH-Vernetzer (C) lediglich einige Gruppen enthalten muß, welche die Verträglichkeit mit den übrigen Bestandteilen der Masse (vor allem mit dem Diorganopolysiloxan (A)) herabsetzen. Diese Gruppen stellen zudem keine reaktiven funktionellen Gruppen dar, sondern sind vorzugsweise inerte Phenylgruppen, wodurch die toxikologische Unbedenklichkeit der Masse (z.B. Trinkwasserzulassung; BGA/FDA-Zulassung) bewahrt bleibt, keine Vulkanisationsstörungen auftreten, ausreichende Lagerstabilität gegeben ist, die Transparenz bzw. Transluzenz des vernetzten Siliconelastomers bewahrt bleibt und keine ausschwitzenden oder extrahierbaren Bestandteile zugesetzt werden. Die Kombination des vermindert verträglichen SiH-Vernetzers (C) mit einer epoxy-, vinyl-, acryloxy- und/oder methacryloxyfunktionelle und hydrolysierbare Reste aufweisenden Organosiliciumverbindung (D) macht es möglich, erstens, den Gehalt an unverträglichen Gruppen im SiH-Vernetzer niedrig zu halten und zweitens, die haftvermittelnde Wirksamkeit der epoxy-, vinyl-, acryloxyund/oder methacryloxyfunktionelle und hydrolysierbare Reste aufweisenden Organosiliciumverbindung (D) auch bei relativ niedriger SiH-Funktionalität des SiH-Vernetzers zu erzielen. Erst die Kombination beider Bestandteile (C) und (D)führt zur Synergie der Selbsthaftungseffekte dieser beiden Bestandteile.

Insbesondere zeichnet sich die vorliegende Zusammensetzung dadurch aus, dass
a) die Vernetzungsgeschwindigkeit kaum vermindert wird,
b) die Transparenz bzw. Farbe der vernetzten Siliconelastomere nicht beeinträchtigt wird,
c) keine nachteiligen Veränderungen der mechanischen Elastomereigenschaften in Kauf genommen werden müssen,
d) der haftvermittelnde Bestandteil (C) bei additionsvernetzbaren Zusammensetzung zugleich als Vernetzer fungiert (kein zusatzlicher SiH-Vernetzer erforderlich),
e) auch auf Metallen eine starke Selbsthaftung erzielt werden kann, ohne die Entformbarkeit aus metallenen Vulkanisationsformen zu verhindern (es zeigt sich, dass die Haftung auf Metall kurz nach der Vernetzung eine Entformung des Siliconelastomerteiles erlaubt; wird der Siliconelastomer-Metall-Haftverbund jedoch gelagert, wächst das Siliconelastomer innerhalb kurzer Zeit fest und dauerhaft auf die Metalloberfläche auf),
f) die Fließfähigkeit bzw. Verarbeitbarkeit der unvernetzten Masse kaum beeinträchtigt wird.

Der haftvermittelnde Bestandteil (C) der vorliegenden Erfindung weist zwar auch eine verminderte Verträglichkeit mit den übrigen Bestandteilen der Masse auf, was an einer Trübung beim Einmischen erkennbar ist, doch verschwindet diese Trübung vollständig, sobald die Masse zum Zwecke der Vernetzung erwärmt wird; dies indiziert eine homogene Verteilung der Vernetzermoleküle in der Masse zum Zeitpunkt der Vernetzung.

Wenn der haftvermittelnde SiH-haltige Bestandteil (C) in mindestens 12 Mol.-% der Reste Phenylgruppen enthält, bleibt hingegen diese Trübung auch bei üblichen Vernetzungstemperaturen bestehen und indiziert eine inhomogene Netzwerkbildung, was anhand der optischen Eigenschaften, der Vernetzungscharakteristik und der mechanischen Eigenschaften auch belegt werden kann.

Beispiele für die Reste **R**^{**1**} sind Alkylreste, wie Methyl-, Ethyl-, Propyl-, Isopropyl-, tert.-Butyl-, n-Pentyl-, iso-Pentyl-, neo-Pentyl-, tert.-Pentyl-, n-Octyl-, 2-Ethylhexyl-, 2,2,4-Trimethylpentyl-, n-Nonyl- und Octadecylrest; Cycloalkylreste, wie Cyclopentyl-, Cyclohexyl-, Cycloheptyl-, Norbornyl-, Adamantylethyl- oder Bornylrest; Aryl- oder Alkarylreste, wie Phenyl-, Ethylphenyl-, Tolyl-, Xylyl-, Mesityl- oder Naphthylrest; Aralkylreste, wie Benzyl-, 2-Phenylpropyl- oder Phenylethylrest, sowie halogenierte und mit organischen Gruppen funktionalisierte Derivate der voranstehenden Reste, wie 3,3,3-Trifluorpropyl-, 3-Iodopropyl-, 3-Isocyanatopropyl-, Aminopropyl-, Methacryloxymethyl- oder Cyanoethylrest. Bevorzugte Reste **R**^{**1**} enthalten 1 bis 10 Kohlenstoffatome sowie gegebenenfalls Halogensubstituenten. Besonders bevorzugte Reste **R**^{**1**} sind Methyl-, Phenyl- und 3,3,3-Trifluorpropylrest, insbesondere der Methylrest.

Die Reste **R**^{**2**} sind einer Hydrosilylierungsreaktion zugänglich. Beispiele hierfür sind Alkenyl- und Alkinylreste, wie Vinyl-, Allyl-, Isopropenyl-, 3-Butenyl-, 2,4-Pentadienyl-, Butadienyl-, 5-Hexenyl-, Undecenyl-, Ethinyl-, Propinyl- und Hexinylrest; Cycloalkenylreste, wie Cyclopentenyl-, Cyclohexenyl-, 3-Cyclohexenylethyl-, 5-Bicycloheptenyl-, Norbornenyl-, 4-Cyclooctenyl- oder Cyclooctadienylrest; Alkenylarylreste, wie Styryl- oder Styrylethylrest, sowie halogenierte und Heteroatome enthaltende Derivate der voranstehenden Reste, wie 2-Bromvinyl-, 3-Brom-1-propinyl-, 1-Chlor-2-methylallyl-, 2-(Chlormethyl)allyl-, Styryloxy-, Allyloxypropyl-, 1-Methoxyvinyl-, Cyclopentenyloxy-, 3-Cyclohexenyloxy-, Acryloyl-, Acryloyloxy-, Methacryloyl- oder Methacryloyloxyrest. Bevorzugte Reste **R**^{**2**} sind Vinyl-, Allyl- und 5-Hexenylrest, insbesondere der Vinylrest.

Bei den Diorganopolysiloxanen (A) der allgemeinen Formel (1) beträgt die bei 25°C bestimmte Viskosität vorzugsweise mindestens 1000 Pa.s, insbesondere mindestens 10 000 Pa.s., vorzugsweise höchstens 1 000 000 Pa.s, insbesondere höchstens bis 100 000 Pa.s.

Füllstoff (B) wird in die Siliconzusammensetzungen eingearbeitet, um eine ausreichend hohe mechanische und/oder elektrische Festigkeit des vernetzten Siliconkautschuks zu erzielen. Füllstoff (B1) mit einer spezifischen Oberfläche von mindestens 50 m²/g, insbesondere 100 bis 400 m²/g gemäß der Bestimmung nach der BET-Methode ist aktiv verstärkend. Die aktiv verstärkenden Füllstoffe (B1) sind vorzugsweise gefällte und/oder pyrogene Kieselsäure. Füllstoff (B2) ist Aluminiumhydroxid, welches auch als Aluminiumtrihydrat bezeichnet wird, vorzugsweise mit einer spezifischen Oberfläche von mindestens 2 m²/g, insbesondere 3 bis 50 m²/g gemäß der Bestimmung nach der BET-Methode.

Aluminiumhydroxid (B2) wird vorzugsweise mit einer Partikelgröße von 0,1 bis 50 µm, bevorzugt 1 bis 30µm eingesetzt und bewirkt eine Verbesserung der elektrischen Isolationseigenschaften und der Brennbarkeit. Das Aluminiumhydroxid (B2) kann dabei unbehandelt oder mit Vinylsilanen oberflächenbehandelt sein, wie z.B. Martinal® 104S von ALUSUISSE, Martinswerk S.A, und Hymod® 632 bzw. 632 SP von Fa. Huber, USA.

Die Silanisierung von Aluminiumhydroxid (B2) kann auch erst bei der Mischungsherstellung erfolgen, indem zuerst das unbehandelte Aluminiumhydroxid (B2) in das Diorganopolysiloxan (A) eingebracht wird und anschließend vorzugweise 0,1 bis 3 Gew.-%, insbesondere 0,2 bis 2 Gew.-%, bezogen auf unbehandeltes Aluminiumhydroxid (B2) einer hydrolysierbaren Vinylverbindung wie Vinyltriethoxy- oder Vinyltrimethoxysilan oder Divinyltetramethyl-disilazan bei vorzugsweise 50 bis 150 °C zudosiert werden. Ebenso geeignet sind entsprechende Mengen an difunktionellen Vinylverbindungen wie Methylvinyldialkoxysilane oder kurzkettige SiOH-reiche Vinylmethylsiloxane, die über eine vorgeschaltete Hydrolyse eines Methylvinylsilanes hergestellt werden können.

Vorzugsweise betragt die Viskosität der Mischung aus Diorganopolysiloxan (A) und Füllstoff (B) mindestens 40 000 Pa.s, insbesondere mindestens 80 000 Pa.s.

Beispiele für **R**^{**3**} sind Alkylreste, wie Methyl-, Ethyl-, Propyl-, Isopropyl-, tert.-Butyl-, n-Octyl-, 2-Ethylhexyl- und Octadecylrest, sowie Cycloalkylreste, wie Cyclopentyl-, Cyclohexyl-, Norbornyl- oder Bornylrest. Bevorzugte Reste **R**^{**3**} sind Kohlenwasserstoffreste mit 1 bis 10 Kohlenstoffatomen. Besonders bevorzugter Rest **R**^{**3**} ist der Methylrest.

Beispiele für **R**^{**4**} (a) sind der Phenyl-, Tolyl-, Xylyl-, Biphenylyl-, Anthryl-, Indenyl-, Phenanthryl-, Naphthyl-, Benzyl-, Phenylethyl- oder Phenylpropylrest, sowie halogenierte und mit organischen Gruppen funktionalisierte Derivate der voranstehenden Reste, wie o-, m-, p-Chlorphenyl-, Pentafluorphenyl-, Bromtolyl-, Trifluortolyl-, Phenoxy-, Benzyloxy-, Benzyloxyethyl-, Benzoyl-, Benzoyloxy-, p-tert.-Butylphenoxypropyl-, 4-Nitrophenyl-, Chinolinyl- oder Pentafluorbenzoyloxyrest.
Beispiele für Kohlenwasserstoffreste **R**^{**4**} (b) mit 2 bis 20 Kohlenstoffatomen sind 3-Chlorpropyl-, 3-Brompropyl-, 3,3,3-Trifluorpropyl-, 2-Fluorethyl-, 1,1-Dihydroperfluordodecyloder der 2-Cyanoethylrest.
Besonders bevorzugte Reste **R**^{**4**} sind der Phenylrest und der 3,3,3-Trifluorpropylrest.

Bevorzugte Reste **R**^{**5**} entsprechen der allgemeinen Formel (4)

-(O)ₛ-(R⁶)ₜ-(O)ᵤ-(X)_{w}-(O)ᵤ-(R⁶)ₜ-(O)ₛ-, (4),

wobei
- **s, t, u** und **w**: unabhängig voneinander die Werte 0, 1 oder 2,
- **R**^{**6**}: gleich oder verschieden sein können und einen bivalenten, gegebenenfalls halogensubstituierten, gegebenenfalls O-, N-, S-, oder P-Atome enthaltenden Kohlenwasserstoffrest, der frei ist von aliphatisch ungesättigten Gruppen und 1 bis 10 Kohlenstoffatome enthalt, wie -CH₂-, -CH₂-CH₂-, -CH₂-CH₂-CH₂-, -CF₂-, -CH₂-CF₂-, -CH₂-CH(CH₃)-, -C(CH₃)₂-, -CH₂-C(CH₃)₂-, -C(CH₃)₂-CH₂-, -CH₂-CH₂-O- oder -CF₂-CF₂-O-,
- **- (X)-**: einen bivalenten Rest, welcher ausgewählt wird aus -Ph-, -Ph-O-Ph-, -Ph-S-Ph-, -Ph-SO₂-Ph-, -Ph-C(CH₃)₂-Ph-, - Ph-C(CF₃)₂-Ph-, -Ph-C(O)-Ph-, Cyclohexylen oder Norbornylen, wobei -Ph- eine Phenylengruppe bezeichnet, bedeuten.

Besonders bevorzugter Rest **R**^{**5**} ist der Phenylenrest.

Das Organohydrogenpolysiloxan (C) enthält pro Molekül vorzugsweise 5 bis 18 SiH-Gruppen. Die bei 25°C gemessene Viskosität des Bestandteils (C) beträgt vorzugsweise 2 mPa.s bis 1 Pa.s.

Aufgrund der Labilität der SiH-Gruppe kann der Bestandteil (C) herstellungsbedingt einen geringen Gehalt, typischerweise <100 Gew.-ppm, Si-gebundener OH-Gruppen aufweisen.

Beispiele für Kohlenwasserstoffreste **R**^{**7**} sind Alkylreste, wie Methyl-, Ethyl-, n-Propyl-, Isopropyl-, tert.-Butyl-, n-Pentyl-, iso-Pentyl-, neo-Pentyl-, tert.-Pentyl-, n-Octyl-, 2-Ethylhexyl-, 2,2,4-Trimethylpentyl-, n-Nonyl- und Octadecylrest; Cycloalkylreste, wie Cyclopentyl-, Cyclohexyl-, Cycloheptyl-, Norbornyl-, Adamantylethyl- oder Bornylrest; Arylreste, wie Phenyl-, Ethylphenyl-, Tolyl-, Xylyl-, Mesityloder Naphthylrest; Aralkylreste, wie Benzyl-, Phenylethyl- oder Phenylpropylrest; Alkenyl- oder Alkinylreste, wie Vinyl-, Allyl-, Isopropenyl-, 3-Butenyl-, 2,4-Pentadienyl-, Butadienyl-, 5-Hexenyl-, Undecenyl-, Ethinyl-, Propinyl- und Hexinylrest; Cycloalkenylreste, wie Cyclopentenyl-, Cyclohexenyl-, 3-Cyclohexenylethyl-, 5-Bicycloheptenyl-, Norbornenyl-, 4-Cyclooctenyl- oder Cyclooctadienylrest; Aralkenylreste, wie Phenylethenyl- und Phenylethinyl-; sowie halogensubstituierte oder Heteroatome enthaltende Derivate der voranstehenden Reste, wie 3-Chlorpropyl-, 3-Brompropyl-, Decafluoro-1,1,2,2-tetrahydrooctyl-, (p-Chlormethyl)phenyl-, (p-Chlormethyl)phenethyl-, Hydroxymethyl-, Hydroxyethyl-, Hydroxypropyl-, Hydroxybutyl, 2-Bromvinyl-, 2-Allyloxymethyl-, Acetyl-, Acetoxymethyl-, Acetoxyethyl-, Acetoxypropyl-, 3-Phenoxypropyl-, Benzoyloxypropyl-, Mercaptopropyl-, Cyanoethyl-, Cyanopropyl-, 3-Cyanobutyl-, 3-Isocyanatopropyl-, 2-(Carbomethoxy)ethyl-, 10-(Carbomethoxy)decyl-, 2-(Carboxymethylthio)ethyl-, 3-Carboxypropyl-, Aminomethyl-, Aminoethyl-, Aminopropyl-, Aminohexyl-, Aminoethylaminopropyl-, 3-(N-Allylamino)propyl-, (Aminoethylaminomethyl)phenethyl-, m-Aminophenyl-, 3-(m-Aminophenoxy)propyl-, 3-Acryloxypropyl-, 3-Acryloxy-2-hydroxypropyl-, 4-(Acryloxymethyl)phenethyl-, Methacryloxymethyl-, Methacryloxyethyl- oder Methacryloxypropylrest. Bevorzugte Reste **R**^{**7**} sind Methyl-, Ethyl-, Propyl-, Butyl-, Octyl-, Vinyl-, Allyl-, Phenyl-, 3,3,3-Trifluorpropyl- und Cyanopropylrest. Besonders bevorzugte Reste **R**^{**7**} sind Methyl-, Vinyl- und Phenylrest.

Beispiele für die Epoxygruppen enthaltenden Reste **R**^{**8**} sind Epoxyethyl-, 2,3-Epoxypropyl-, 3,4-Epoxybutyl-, 5,6-Epoxyhexyl-, 9,10-Epoxydecyl-, Glycidyloxy-, 3-Glycidyloxypropyl-, Glycidyloxyisobutyl-, 2-Methylglycidyloxypropyl-, 3-Phenylglycidyloxypropyl-, Glycidyloxyphenylnonyl-, Glycidyloxybenzylethyl-, 3,4-Epoxycyclohexyl-, 2-(3,4-Epoxycyclohexyl)ethyl-, 3-(3,4-Epoxycyclohexyl)propyl-, 1,4-Epoxycyclohexyl- oder 2-(1,4-Epoxycyclohexyl)ethylrest. Bevorzugte Reste **R**^{**8**} sind 3,4-Epoxycyclohexyl-,3-(3,4-Epoxycyclohexyl)propyl- und Glycidoxypropylrest. Vorzugsweise weist Rest **R**^{**8**} 2 bis 10 Kohlenstoffatome auf. Der besonders bevorzugte Rest **R**^{**8**} ist der Glycidoxypropylrest.

Beispiele für die mit Acryloxy- oder Methacryloxygruppe substituierten monovalenten Kohlenwasserstoffreste mit 2 bis 20 Kohlenstoffatomen sind vorstehend für **R**^{**7**} aufgeführt. Bevorzugt sind die Kohlenwasserstoffreste, die keine Heteroatome aufweisen, insbesondere mit 2 bis 10 Kohlenstoffatomen, wie Ethyl-, Propyl- oder Butylreste.

Beispiele für die Reste **R**^{**9**} sind
a) Alkoxy-, Enoxy- oder Aryloxygruppen der allgemeinen Formel-OR¹⁰, wie Methoxy-, Ethoxy-, n-Propoxy-, iso-Propoxy-, n-Butoxy-, sec-Butoxy-, tert-Butoxy-, 2-Ethylbutoxy-, 2-Ethylhexoxy-, Vinyloxy-, Allyloxy-, Isopropenyloxy-, Cyclobutenyloxy-, Cyclohexenyloxy-, 1,3-Butadienyloxy-, Propargyloxy-, Phenoxy-, Benzyloxy- oder m,p-Vinylbenzyloxyrest;
b) Acyloxygruppen der allgemeinen Formel -OCOR¹⁰, wie Formyloxy-, Acetoxy-, 2-Ethylhexanoxy-, Acryloxy-, Methacryloxy-, Benzoyloxy- oder Norbornylacetoxyrest;
c) Aminogruppen der allgemeinen Formel -NH₂, -NHR¹⁰ oder - NR¹⁰₂, wie Dimethylamino-, Diisopropylamino-, Allylamino-, n-Butylamino-, sec-Butylamino- oder Cyclohexylaminorest;
d) Oximgruppen der allgemeinen Formel -ON=CH₂, -ON=CHR¹⁰ oder - ON=CR¹⁰₂, wie Methylethylketoxim-, Methylisobutylketoxim-, Methyl-n-amylketoxim- oder Dimethylketoximrest;
e) Amidgruppen der allgemeinen Formel -NH-C(=O)-R¹⁰ oder -NR¹⁰-C(=O)-R¹⁰, wie N-Methylbenzamido- oder N-Methylacetamidorest;
f) Aminoxygruppen der allgemeinen Formel -ONH₂, -ONHR¹⁰ oder - ONR¹⁰₂, wie Hydroxylaminorest; oder
g) Halogensubstituierte oder Heteroatome enthaltende oder komplexer zusammengesetzte Derivate der voranstehend genannten Reste, wie p-Aminophenoxy-, 2-Methoxyethoxy-, 1-Methoxy-2-propoxy-, 1-Methoxy-isopropenyloxy-, Methoxyethoxyethoxy-, 1-Methoxy-2-methylpropenyloxy-, Acryloxymethoxy-, Methacryloxy(polyethylenoxy)-, Furyloxy-, N-Vinylformamidorest sowie -O-Ph-C(=O)-Ph, -O-C(CF₃)=CH-C(=O)-CF₃, -O-C(CH₃)=CH-C(=O)-CH₃, -O-C(CH₃)₂-CH=CH₂, -NH-C(=O)-CH₃, -O-C(=O)-CH₂Br, -O-C(=O)-CF₃, -O-C(=O)-C=CH oder -O-CH₂-C(=O)-O-Si(CH₃)₃,
wobei die Reste **R**^{**10**} monovalente aliphatische oder aromatische, gesättigte oder ungesättigte, gegebenenfalls halogensubstituierte Kohlenwasserstoffreste mit 1 bis 10 Kohlenstoffatomen darstellen. Bevorzugte Reste **R**^{**9**} sind die Alkoxyreste, wie Methoxy-, Ethoxy-, Propoxy- und Butoxyrest. Der besonders bevorzugte Rest **R**^{**9**} ist der Methoxyrest.

Als Organosiliciumverbindung (D) bevorzugt sind organofunktionelle Silane, besonders bevorzugt sind Glycidyloxypropyltrimethoxysilan (Glymo), Vinyltrimethoxysilan, Vinyltriethoxysilan und Methacryloxypropyltrimethoxysilan.

Die Reste **R**^{**1**} bis **R**^{**10**} können in allen vorstehenden Formeln gleich oder verschieden sein. Als Heteroatome sind bevorzugt N, O, S. Als Halogensubstituenten sind bevorzugt F, Cl, Br.

Hydrosilylierungskatalysator (E) dient als Katalysator für die als Hydrosilylierung bezeichnete Additionsreaktion zwischen den aliphatisch ungesättigten Kohlenwasserstoffresten **R**^{**2**} der Diorganopolysiloxane (A) und den siliciumgebundenen Wasserstoffatomen der Organohydrogenpolysiloxane (C). In der Literatur sind zahlreiche geeignete Hydrosilylierungskatalysatoren beschrieben. Prinzipiell können alle dem Stand der Technik entsprechenden und in additionsvernetzenden Siliconkautschukmassen eingesetzten Hydrosilylierungskatalysatoren verwendet werden.

Als Hydrosilylierungskatalysator (E) können Metalle und deren Verbindungen, wie Platin, Rhodium, Palladium, Ruthenium und Iridium, vorzugsweise Platin, eingesetzt werden. Die Metalle können gegebenenfalls auf feinteiligen Trägermaterialien, wie Aktivkohle, Metalloxiden, wie Aluminiumoxid oder Siliciumdioxid, fixiert sein.
Vorzugsweise werden Platin und Platinverbindungen verwendet. Besonders bevorzugt werden solche Platinverbindungen, die in Polyorganosiloxanen löslich sind und bei Lagertemperatur bis 40°C inert, beim Erwärmen aber die Hydrosilylierung hinreichend schnell katalysieren.
(E) Platinkatalysator, ausgewählt aus Verbindungen der allgemeinen Formeln und

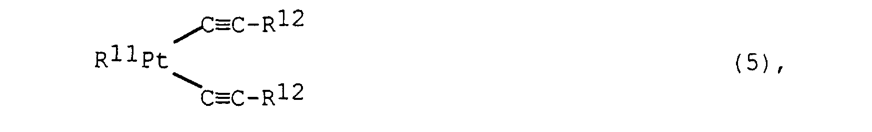

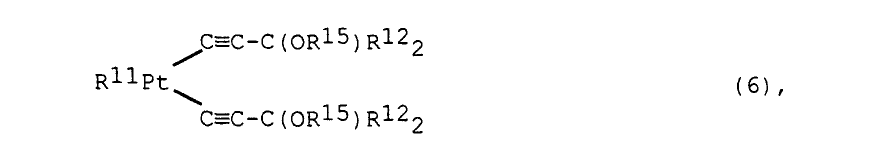

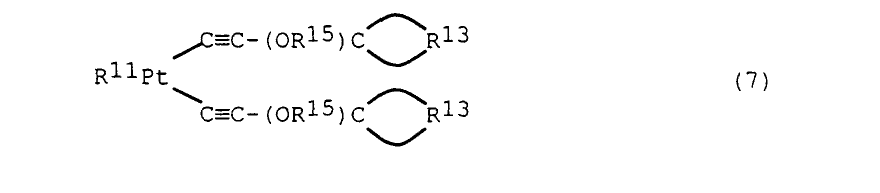

H-C≡C-(R¹⁴)_{f}-C≡C-[-Pt(R¹¹)-C≡C-(R¹⁴)_{f}-C≡C-]ₑ-H (8),

wobei
- R¹¹: ein gegebenenfalls substituiertes Dien bedeutet, das durch mindestens eine π-Bindung mit Platin verbunden ist und eine unverzweigte oder eine verzweigte Kette mit 4 bis 12 Kohlenstoffatomen oder einen cyclischen Ring mit 6 bis 18 Kohlenstoffatomen darstellt,
- R¹²: gleich oder verschieden sein kann und Wasserstoffatom, Trialkylsilylrest, Halogenatom oder einwertige, gegebenenfalls mit Halogenatomen oder Cyanoresten substituierte Kohlenwasserstoffreste mit 1 bis 24 Kohlenstoffatomen bedeutet,
- R¹³: gleiche oder verschiedene zweiwertige, gegebenenfalls substituierte Kohlenwasserstoffreste mit 1 bis 24 Kohlenstoffatomen bedeutet,
- R¹⁴: gleich oder verschieden sein kann und zweiwertige, gegebenenfalls substituierte Kohlenwasserstoffreste mit 1 bis 12 Kohlenstoffatomen, Silanreste oder Siloxanreste bedeutet,
- R¹⁵: gleich oder verschieden sein kann und Wasserstoffatom oder einen einwertigen Kohlenwasserstoffrest mit 1 bis 20 Kohlenstoffatomen ist,
- e: eine ganze Zahl größer oder gleich 1 bedeutet und
- f: 0 oder 1 ist.

Falls es sich bei R¹¹ um ein substituiertes Dien bzw. bei den Resten R¹³ und R¹⁴ um substituierte Kohlenwasserstoffreste handelt, sind als Substituenten Halogenatome, wie F, Cl, Br und J, Cyanoreste, -NR¹⁵₂ sowie Gruppen -OR¹⁵ bevorzugt, wobei R¹⁴ die oben genannte Bedeutung hat.

Besonders bevorzugt sind Cyclooctadien-Komplexe des Platins mit Acetylidliganden, wie sie in EP-A- 994 159 beschrieben sind, insbesondere Bis(alkinyl)(1,5-cyclooctadien)platin-, Bis(alkinyl)(1,5-dimethyl-1,5-cyclooctadien)platin- und Bis(alkinyl)(1,6-dimethyl-1,5-cyclooctadien)platin-Komplexe.

Bei Einsatz des Platinkatalysators der allgemeinen Formeln 5 bis 8 sind die vernetzbaren Siliconzusammensetzungen als einkomponentige Formulierung vermarktbar, die bei 25°C und Umgebungsdruck eine gute Lagerstabilität, insbesondere von mindestens 3 Monaten aufweisen und erst bei erhöhter Temperatur rasch vernetzen.

Bei der Herstellung der vernetzbaren Siliconzusammensetzungen ist es von großem Vorteil, daß sich der Platinkatalysator (E) der allgemeinen Formeln 5 bis 8 leicht einarbeiten läßt.

Die vernetzbaren Siliconzusammensetzungen mit Platinkatalysator (E) der allgemeinen Formeln 5 bis 8 haben ferner den Vorteil, daß die Hydrosilylierungsreaktion sich nicht mit der Reaktionsdauer verlangsamt.

Die vernetzbaren Siliconzusammensetzungen mit Platinkatalysator (E) der allgemeinen Formeln 5 bis 8 haben ferner den Vorteil, daß keine Platin-Kolloide gebildet werden und durch ihren Einsatz keine Verfärbungen resultieren.

Als Peroxidvernetzer (E) können anorganische und organische Peroxide, insbesondere organische Peroxide eingesetzt werden. Beispiele für solche organischen Peroxide sind Peroxyketal, z.B. 1,1-Bis(tert.-butylperoxy)-3,3,5-trimethylcyclohexan, 2,2-Bis(tert.-butylperoxy)butan; Acylperoxide, wie z. B. Acetylperoxid, Isobutylperoxid, Benzoylperoxid, Di(4-methylbenzoyl)peroxid, Bis-(2,4-dichlorbenzoyl)peroxid; Dialkylperoxide, wie z. B. Di-tert-butylperoxid, Tert-butylcumylperoxid, Dicumylperoxid, 2,5-Dimethyl-2,5-di(tert.butylperoxy)hexan; und Perester, wie z.B. Tert.butylperoxyisopropyl-carbonat.

Die selbsthaftenden vernetzbaren 1-Komponenten Siliconzusammensetzungen enthalten vorzugsweise 10 bis 90 Gew.-%, insbesondere 25 bis 60 Gew.-% Diorganopolysiloxan (A).

Die Siliconzusammensetzungen enthalten vorzugsweise 10 bis 80 Gew.-%, insbesondere 20 bis 60 Gew.-% Füllstoff (B).

Die Siliconzusammensetzungen enthalten vorzugsweise 0,1 bis 20 Gew.-%, insbesondere 0,5 bis 5 Gew.-% Organohydrogenpolysiloxan (C).
Die Siliconzusammensetzungen enthalten vorzugsweise 0,1 bis 10 Gew.-%, insbesondere 0,2 bis 2 Gew.-% Organosiliciumverbindung (D) .

Die Menge des eingesetzten Hydrosilylierungskatalysators (E) richtet sich nach der gewünschten Vernetzungsgeschwindigkeit sowie ökonomischen Gesichtpunkten. Üblicherweise werden 1 x 10⁻⁵ bis 5 x 10⁻² Gew.-%, insbesondere 5 x 10⁻⁴ bis 5 x 10⁻³ Gew.-% Platin-Katalysatoren, berechnet als Platin-Metall und bezogen auf die Siliconzusammensetzungen eingesetzt.
Die Menge des eingesetzten Peroxidvernetzers (E) beträgt vorzugsweise 0,1 bis 5 Gew.-%, insbesondere 0,2 bis 3 Gew.-%, bezogen auf die Siliconzusammensetzungen.

Die selbsthaftenden vernetzbaren 1-Komponenten Siliconzusammensetzungen können gegebenenfalls weitere Bestandteile (F), wie nicht verstärkende Füllstoffe, Inhibitoren, Stabilisatoren, Pigmente, und Katalysatoren enthalten.

Alle Komponenten (A) bis (F) können eine Verbindung oder eine Mischung verschiedener Verbindungen enthalten.

Die selbsthaftenden vernetzbaren 1-Komponenten Siliconzusammensetzungen weisen vorzugsweise eine bei 25°C nach DIN 53523 Teil 3 bestimmte Mooney-Viskosität von 15 bis 150, insbesondere 23 bis 95 auf.

Die Compoundierung der selbsthaftenden vernetzbaren 1-Komponenten Siliconzusammensetzungen erfolgt durch Mischen der oben aufgeführten Komponenten in beliebiger Reihenfolge. Die Vernetzung der Siliconzusammensetzungen erfolgt durch Erwärmen, vorzugsweise bei 40 bis 250°C, bevorzugt bei mindestens 50°C, insbesondere bei mindestens 100°C, bevorzugt bei höchstens 200°C, insbesondere bei höchstens 180°C.

Gegenstand der Erfindung sind auch die durch Vernetzung der selbsthaftenden vernetzbaren 1-Komponenten Siliconzusammensetzungen erhältlichen Siliconelastomere.

Die selbsthaftenden vernetzbaren 1-Komponenten Siliconzusammensetzungen können mit einem Substrat verbunden werden, indem die Siliconzusammensetzungen auf das Substrat aufgebracht und anschliessend vorzugsweise durch Erwärmen auf 30 bis 250°C zu einem Verbundmaterial vernetzt werden. Die Siliconzusammensetzungen können insbesondere überall dort mit Vorteil eingesetzt werden, wo eine gute Haftfestigkeit zwischen dem Siliconelastomer und einem Substrat, vorzugsweise bestehend aus organischen Kunststoffen, Metallen oder Gläsern, erwünscht wird. Das Substrat kann als Formteil, Folie oder Beschichtung vorliegen.
Die Siliconzusammensetzungen eignen sich zur Herstellung von Verbundmaterial durch Beschichten, Verkleben, Vergießen und zur Herstellung von Formartikeln.
Insbesondere eignen sich die Siliconzusammensetzungen zum Verguß und zum Verkleben elektrischer und elektronischer Teile sowie zur Herstellung von Verbundformteilen, wie Verbundisolatoren für Mittel- und Hochspannung. Unter Verbundformteilen wird hier ein einheitlicher Formartikel aus einem Verbundmaterial verstanden, der aus einem aus den Siliconzusammensetzungen hergestelltem Siliconelastomerteil und mindestens einem Substrat so zusammengesetzt ist, daß zwischen beiden Teilen eine feste, dauerhafte Verbindung besteht. Vorzugsweise erfolgt die Herstellung eines solchen Verbundformteiles, indem ein Metall oder oxidischer Grundkörper oder organischer Kunststoff zu einem Formartikel verarbeitet wird und anschließend die Siliconzusammensetzungen mit diesem Formteil in Verbindung gebracht und vernetzt werden, was z.B. im Spritzgußverfahren, mittels Extrusion oder im sog. pressmoulding-Verfahren erfolgen kann. Verbundisolatoren werden z.B. durch Ummantelung von GFK-Stäben oder -Rohren hergestellt. Verbundmaterialien und insbesondere Verbundformteile können in vielfältigsten Anwendungsbereichen zum Einsatz kommen, z.B. in der Elektronik- Haushaltgeräte-, Gebrauchsgüter-, Bau- und Automobilindustrie, in der Medizintechnik, der Sport- und Freizeitartikelherstellung etc.

In den nachfolgenden Beispielen sind, falls jeweils nicht anders angegeben,
a) alle Drucke 0,10 MPa (abs.);
b) alle Temperaturen 20° C;
c) alle Vikositäten bei Temperaturen 25° C gemessen.

### Beispiele:

### Substrate

Die Haftung der erfindungsgemäßen sowie nicht erfindungsgemäßen Siliconelastomere wurde auf folgenden Substraten getestet:
a) Epoxidharz-Glashartgewebe (GFK Anhydrid-Härt.): Hgw 2372 (THYSSENSCHULTE GmbH)
b) Polyamid 6: Durethan® BKV30 (Bayer AG; 30%GF)
c) Polybutylenterephthalat (PBT): Ultradur® B4300G6 (BASF AG; 30% GF)
d) Aluminium (AlMg1,Industriequalität; nicht grundiert)
e) Stahl: V2A-Stahl (1.4541, Industriequalität)

### Charakterisierung der Haftung

In eine teflonisierte oder mit Formentrennmittel behandelte Edelstahlpreßform wird ein Substratstreifen der Abmessungen 60x25x2mm eingelegt und die Form mit der zu testenden Siliconelastomermischung gefüllt. Die Preßvulkanisation erfolgt während 3(bis max. 5) min bei einer Temperatur von 170°C und einer Druckkraft von 30 to. Nach Entnahme des Laminates wird der starre Substratkörper fest eingespannt und die maximale Trennkraft bestimmt, die notwendig ist, den anhaftenden Siliconelastomerstreifen im Schälversuch abzulösen. Die Bestimmung der Trennkraft erfolgt gemäß DIN 53531 und wird in N/mm angegeben. Je Beispiel werden 3 - 10 Laminate gemessen, die Trennkraft als Mittelwert bestimmt und der Anteil an kohäsivem Fehler, d.h. die Rauhigkeit der aufgerissenen Oberflächen qualitativ beurteilt.

### Herstellung der haftvermittelnden Mischung V1 aus Organohydrogenpolysiloxan (C) mit Füllstoff (B)

In einem Rührwerk werden 5,0 kg eines Trimethylsiloxy-endständigen Methylhydrogenpolysiloxanes, Me₃Si-(-O-SiH(Me))ₙ-O-SiMe₃, das gemäß ²⁹Si-NMR eine zahlenmittlere Kettenlänge von n=53 besitzt, und 5,0 kg eines Trimethylsiloxy-endständigen Siloxan-Copolymers, bestehend aus Dimethylsiloxy- und Methylphenylsiloxy-Einheiten im Molverhältnis 15,2 : 21,8 und einer bei 25°C gemessenen Viskosität von 100 mPa.s , vorgelegt. Unter fortwährendem Rühren werden bei Raumtemperatur 1,8 g Phosphornitrilchlorid, hergestellt nach US-A-4,203,913 zugegeben. Nach Anlegen eines Vakuums von <20 mbar wird 5 min gerührt und anschließend das Vakuum mit N₂ gebrochen. Anschließend wird 2 h bei einer Temperatur von 100°C gerührt. Man gibt 14 g Hexamethyldisilazan zu und rührt weitere 15 min. Abschließend wird ein Vakuum von <10 mbar angelegt, die Mischung unter fortwahrendem Rühren 1 h bei 100°C von flüchtigen Bestandteilen befreit, das Vakuum mit N₂ gebrochen, auf Raumtemperatur abgekühlt und das Reaktionsprodukt filtriert. Man erhält ein Trimethylsiloxy-endständiges Polyorganosiloxan, das aus -O-Si(Me)₂-, -O-SiH(Me)- und -O-Si(Me)Ph- Einheiten im Molverhaltnis 15,2 : 63,0 : 21,8 zusammengesetzt ist, und bei 25°C eine Viskosität von 32,1 mm²/s aufweist. Das Produkt enthält durchschnittlich 17 Si-H-Gruppen je Molekul.

Dieses ölige PM-haltige H-Siloxan wird mit 10 % Kieselsäure mit einer BET Oberfläche von 300 m²/g vermischt, um eine walzenverarbeitbare Viskosität zu erhalten.

### Herstellung der nicht erfindungsgemäßen Mischung V2 aus Organohydrogenpolysiloxan mit Füllstoff (B)

Statt des in Beispiel 1 beschriebenen phenylhaltigen Vernetzers wird ein Trimethylsiloxy-endständiges Polyorganosiloxan eingesetzt, welches lediglich -O-Si(Me)₂- und -O-SiH(Me)-Einheiten im Molverhältnis 29 : 71 enthält und eine Viskosität bei 25°C von 30 mm²/s aufweist; dieser Vernetzer enthält durchschnittlich 33 Si-H-Gruppen je Molekül.

### Herstellung des Platin-1K-Katalysator-Batch

589,4 Masseteile eines Vinyldimethylsiloxy-terminierten Polydimethylsiloxans mit einer Brabender-Plastizität von 630 mkp entsprechend einer mittleren Molmasse von ca. 500000 g/mol wurden mit 252,6 Masseteile einer hydrophoben pyrogenen Kieselsäure mit einer Oberfläche nach BET von 300 m²/g und einem Kohlenstoffgehalt von 3,95 Gew.-%, die in Portionen zudosiert wurde, 4 Stunden in einem Kneter zu einer homogenen Masse vermischt.
Der Katalysatorbatch wird hergestellt indem 500 g der oben beschriebenen Grundmasse mit 2,1 g Platinkomplex Katalysator der Formel [(COD)Pt(p-C≡C-C₆H₄-SiMe₃)₂], hergestellt gemäß EP-A-994 159, im Kneter 30 Minuten homogenisiert wurden.

### Beispiel 1

In einem 1 to-Kneter werden 490 kg HTV-Kautschuk, der eine Mischung aus 26 % Kieselsäure mit einer BET Oberfläche von 300 m²/g und einem vinylendständigen Dimethylpolysiloxan der Viskosität 33 000 Pa.s ist (ELASTOSIL® R 401/60 S; mit einer Mooney Viskosität 42 Endwert; erhältlich von der Wacker-Chemie GmbH) eingelegt und portionsweise mit insgesamt 460 kg feinteiligem Aluminiumhydroxid Hymod® 632 von Fa. Huber, USA, mit einer BET Oberflache von 7 m²/g und 5 kg Vinyltriethoxysilan über 2 h bei 80°C vermischt zu einem Zwischenprodukt 1.

In dieses werden noch vor dem Austrag nacheinander 5 kg Glycidyloxipropyl-trimethoxysilan und 1,5 kg 1-Ethinyl-1-cyclohexanol als Inhibitor eingemischt. Das über eine Austragsschnecke und ein 100µm-Sieb gestrainerte HTV-Rohprodukt wird auf einem wassergekühlten 2-Rollen-Walzwerk mit insgesamt 1,8 % aus **V1** und 2 % des **Platin-1K-Katalysator-Batch** fertiggestellt.

Der additionsvernetzende 1K- Kautschuk hat eine Mooney-Viskosität nach DIN 53523 von 28(Endwert), bzw. dynamische Viskosität von 186000 Pa.s bei einer Schergeschwindigkeit von 1 Hz (Winkelgeschwindigkeit von 6,3 rad/sec) und 25 °C.
Die Anspringtemperatur beträgt 135°C, die wie die Vulkameterkurve über mindestens 5 Monate Lagerzeit bei Raumtemperatur stabil bleibt.
Das nach Preßvulkanisation bei 160 °C/15 min erhaltene Lichtbogen- und kriechstromfeste Isolatormaterial (Klasse 1A 4,5 kV nach IEC 60587 mindestens 6 h beständig bei 4,5 kV; bzw. > 300 sec. Lichtbogentest nach IEC 61621) hat eine Härte von 65 (Shore A), Reißfestigkeit von 4,4 N/mm² bzw. Reißdehnung von 550%.
Der nach obiger Methode durchgeführte Haftungstest auf Epoxi-GFK a) ergab nach 1 Tag Lagerung an Luft/RT einen ausgezeichneten Wert von 8,7 N/mm, der auch nach einem Kochtest von 96 Stunden nur unwesentlich abfiel. Dabei kam es zu einem Kohäsionsriß in der Siliconschicht, mit erheblichen Resten auf dem GFK-Blättchen.
Auch auf glasierten Oberflächen (Glas-Objektblättchen bzw. glasiertes Alu/Fa.Epcos) erhalt man eine gute Haftung von 5,1 N/mm.

### Vergleichsbeispiel 1 (nicht erfindungsgemäß, V2)

Eine völlig analog zu obigem Zwischenprodukt 1 hergestellte homogene HTV-Mischung wird nicht mit einem Epoxysilan, sondern nur mit 1,5 kg 1-Ethinyl-1-cyclohexanol im gleichen Kneter vermischt und wie oben über ein 100µm Sieb gereinigt.
Auf der gekühlten Walze wird **Mischung V2** (ohne Phenyl-Gruppen) in einer äquivalenten Menge eingearbeitet, sodaß sich derselbe Si-H-Vernetzergehalt ergibt. Dann wird wieder mit 2 % des beschriebenen **Platin-1K-Katalysator-Batch** fertiggestellt.
Der erhaltene additionsvernetzende Isolator-Kautschuk hat sehr ahnlich gute elektrische und mechanische Werte wie das erfindungsgemäße selbsthaftende Produkt von Beispiel 1: Mooney Viskosität 29, Anspringtemperatur 139°C ; nach der analogen Vulkanisation eine Härte von 74 (Shore A), Reißfestigkeit 4,9 N/mm².
Der Haftungstest auf demselben Epoxidharz-GFK zeigte aber nur niedrige Werte unter 1 N/mm (das leicht delaminierbare GFK-Blättchen zeigt keinerlei Siliconrückstände mehr). Bei diesem kriechstromfesten HTV-Kautschuk wäre ein vorgelagerter Primerschritt zusätzlich notwendig, um ein stabiles Composite für Hochspannungsanwendungen herzustellen .

### Vergleichsbeispiel 2 (nicht erfindungsgemäß, V2 + Epoxysilan)

Das Vergleichsbeispiel 1 wird wiederholt mit dem Unterschied, daß diesmal auch 0,5 % Epoxysilan eingemischt werden wie im erfindungsgemaßen Beispiel 1.
Man erhält zwar ebenfalls einen ausgezeichneten "Isolator-Kautschuk", aber kaum bessere Haftungswerte nach der Vulkanisation als in Vergleichsbeispiel 1. Nach einem mehrtägigen Haftungsaufbau an Luft/RT sind dann zwar Werte bis ca. 2,7 N/mm (wenig Siliconrückstände auf dem GFK) zu messen. Da aber bei der geringen Anfangshaftung hier ein großes Risiko der Delaminierung beim Entformen direkt nach der maschienellen Verarbeitung z.B. im Pressmolding besteht, ist also auch mit einem funktionellen Sil(ox)anzusatz eine vorgelagerte Primerbehandlung des Composite-Substrates zur Sicherheit notwendig.

### Beispiel 2

In einem Doppelmuldenkneter werden 100 (Masse-)Teile eines langkettigen HTV-Festpolymer mit einer Brabender-Plastizität von ca. 700 mkp bzw. 41 000 Pa.s der Struktur Vinyldimethylsiloxy-terminierten Polydimethylsiloxans mit 0,08 Mol-% Vinylmethylsiloxy-Einheiten in der Kette vorgelegt und mit 7 Teilen eines kurzkettigen Dimethylsiloxans mit einem Si-OH-Gehalt von 4 % vermischt. Nach portionsweiser Zugabe/Homogenisierung von 37 Teilen einer hydrophilen pyrogenen Kieselsäure mit einer BET-Oberfläche von 300 m²/g werden insgesamt 150 Teile eines mit 1% Vinyltrialkoxysilan silylierten Aluminiumhydroxids (Apyral® 40 VS1 von Nabaltec GmbH, Schwandorf) mit einer BET-Oberfläche von 3 m²/g bis zur Homogenität eingearbeitet.
Nach Zugabe von 0,6 Teilen Inhibitor Ethinyl-1-cyclohexanol , 1,5 Teilen eines Metallstearats und gegebenenfalls einer Farbpaste kann das homogene **Zwischenprodukt 2** ausgefahren und über ein entsprechendes Strainersieb gereinigt werden. Die Fertigstellung erfolgt wieder auf der gekühlten Walze durch Einarbeitung von 2,3 % **Mischung V1,** 0,4 % Methacryloxypropyltrimethoxysilan und 2 % des oben beschriebenen **Platin-1K-Katalysator-Batch.** Der additionsvernetzende 1K- Kautschuk hat eine Mooney-Viskosität von 46 (Endwert).

Nach der Preßvulkanisation bei 165°C/15min erhält man einen hochspannungs-bestandigen Kautschuk (Kriechstromfestigkeit mindestens 6 h bei 4,5 kV nach IEC 60587; Lichtbogenfestigkeit nach IEC 61621 > 300 sec.) der Härte 67(Shore A), mit einer Reißfestigkeit von 4,6 N/mm² (Weiterreißwiderstand 16,5 N/mm). Die nach dem Haftungstest nach DIN 53531 ermittelten Trennwerte sind 5,4 N/mm auf GFK a), 4,4 N/mm auf Aluminium d) und 6,1 N/mm auf V2A-Stahl e). Dabei bleiben Siliconbestandteile auf den Prüfsubstraten zurück.
Die GFK-Haftung übersteht einen 96 h-Kochtest nahezu unverändert (< 10% Abnahme).

### Beispiel 3

68 (Masse-)Teile des langkettigen HTV-Festpolymers von Beispiel 2 werden mit 26 Teilen der hydrophilen pyrogenen Kieselsaure von Beispiel 2 und 4 Teilen eines kurzkettigen Polydimethylsiloxans zu einem HTV-Kautschuk mit Mooney-Viskosität 33 (Endwert) (Wacker ELASTOSIL® R 401/50 S erhältlich von der Wacker-Chemie GmbH) vermischt. Dieser Kautschuk wird in einem heiz- und kuhlbaren Kneter portionsweise mit insgesamt 94 Teilen gefälltem Aluminiumhydroxid (Apyral® 40 E von Nabaltec GmbH, Schwandorf) mit einer BET-Oberfläche von 3 m²/g, 1,5 Teilen Vinyltrimethoxysilan und einem Teil der hydrophilen pyrogenen Kieselsäure von Beispiel 2 mindestens 2 h bei 90°C homogenisiert.
Diese Mischung wird abgekühlt und noch vor dem Ausfahren /Strainern mit 0,8 Teilen Methacryloxypropyltrimethoxysilan und 2,5 Teilen Glycidoxypropyltrimethoxysilan vermischt.
Das gereinigte **Zwischenprodukt 3** wird auf dem Walzwerk mit 0,3 % **Mischung V1** und 0,8 % 2,5-Dimethyl-2,5-di(tert.butylperoxy)hexan sowie gegebenenfalls mit einer gewünschten HTV-Farbpaste zum peroxidvernetzenden 1K-Kautschuk mit einer Mooney-Viskosität von 38(Endwert) fertiggestellt.
Nach der Druckvulkanisation bei 165°C/5 min erhält man einen gut entformbaren hochspannungsbeständigen "Isolator"-Kautschuk der Härte 71 und Reißfestigkeit 6,1 N/mm². Er ist mindestens 6 h kriechstrombeständig bei 4,5 kV nach IEC 60587 und > 300 sec lichtbogenfest nach IEC 61621.
Der Haftungstest auf GFK-Blättchen a) ergab nach 1 Tag Lagerung (feuchte Luft/RT, d.h.Haftungsaufbau) bereits hohe Trennwerte von 5 - 6 N/mm, bzw. Siliconrückstände auf dem GFK.

### Beispiel 4

Das **Zwischenprodukt 3** aus Beispiel 3 wird jetzt auf dem Walzwerk nur mit 1% Di(4-methyl-benzoyl)peroxid und gegebenenfalls mit 1 % eines Reversionsstabilisators, eines Abfangers für saure Spaltprodukte sowie einer Farbpaste fertiggestellt.
Der erhaltene peroxidvernetzende 1K-Isolator-Kautschuk mit einer Mooney-Viskosität von 37 (Endwert) läßt sich gut über Extrusion bei 150°C/20 min auf verschiedene Substrate vulkanisieren. Die elektrischen Werte erfüllen ebenso die Normen wie Beispiel 3.
Das unter diesen Bedingungen hergestellte Composite mit GFK-Blättchen a) zeigt nach ca. 1 Tag Lagerung/Haftungsaufbau bereits Trennwerte über 4 N/mm.

### Beispiel 5

Zu 100 Masse-Teilen Wacker Elastosil® R 420/60 S (einem vernetzerfreien hochreißfesten HTV-Kautschuk der Viskosität 51/Mooney-Endwert, hergestellt aus 64 (Masse-)Teilen des langkettigen HTV-Festpolymers von Beispiel 2 und 33 (Masse)Teilen silanisierter Kieselsäure mit einer BET-Oberfläche von 300 m²/g, (Wacker-Chemie GmbH) werden auf dem gekühlten Walzwerk 1,1 % Epoxy-Sil(ox)an-Batch (vorher hergestellt durch Vermischung/Umsetzung von Glycidoxypropyltrimethoxysilan mit ca. 15 % silanisierter Kieselsäure mit einer BET-Oberfläche von 300 m²/g (Wacker HDK® SKS 300)), 2,1 % **Mischung V1,** 2 % **Platin-1K-Katalysator-Batch** und 0,18 % Inhibitor 1-Ethinyl-1-cyclohexanol gemischt.
Der erhaltene additionsvernetzende Siliconkautschuk ist bei Raumtemperatur mindestens 5 Monate haltbar, ohne merkliche Veränderung der Viskosität bzw. Verarbeitbarkeit oder Verschlechterung der Vulkanisationscharakteristik.
Dieser transparente 1K-Siliconkautschuk mit einer Mooney-Viskosität von 41 (Endwert) läßt sich sehr gut über Pressmoulding verarbeiten, da bei Cycluszeiten von 2 min(180°C) bis ca. 5min (160°C) kaum Formenhaftung auftritt. Man erhält ein reißfestes Vulkanisat (Reißfestigkeit nach DIN 53504-S1 10 N/mm²; Reißdehnung ca. 1100 %) der Härte 60 (Shore A nach DIN 53505).
Bei der Verpressung auf Kunststoffen und Metallen erzielt man dabei ohne Grundierung eine rel. gute Haftung. Die nach der beschriebenen Methode ermittelten Trennwerte für Polyamid b) liegen bei 7,5 N/mm, für PBT c) bei 7,7 N/mm, auf Aluminium d) über 7 N/mm und für V2A-Stahl bis über 8 N/mm. Diese sehr guten Endhaftungswerte (erhebliche Siliconrückstande bleiben am Hartsubstrat) bauen sich je nach Lagerbedingungen bereits nach wenigen Stunden bis Tagen auf und sind wasserdampfstabil (nach Kochtest).

### Vergleichsbeispiel 3 (nicht erfindungsgemäß analog Beispiel 5 aber mit V2 statt V1)

Eine völlig analog Beispiel 5 aufgebaute Mischung, die aber die **Mischung V2** enthalt, statt der **Mischung V1,** liefert zwar auch ähnliche gute mechanische Werte, aber deutlich schlechtere Haftungen auf Kunststoffen.
Die Trennwerte für Polyamid b) sind hier nur 2,3 N/mm und bei PBT c) nur 1,9 N/mm (jeweils relativ glatte Delaminierung).

## Patentansprüche

1. Selbsthaftende durch Erwärmen vernetzbare 1-Komponenten Siliconzusammensetzungen, die
(A) Diorganopolysiloxan der allgemeinen Formel (1)
R¹ ₐR² _{b}SiO_{(4-a-b)/2} (1),
in der
**R**^{**1**} Hydroxylrest oder einen monovalenten, gegebenenfalls halogensubstituierten, gegebenenfalls O-, N-, S-, oder P-Atome enthaltenden Kohlenwasserstoffrest mit 1 bis 20 Kohlenstoffatomen, der frei von aliphatisch ungesättigten Gruppen ist,
**R**^{**2**} einen monovalenten, aliphatisch ungesättigten, gegebenenfalls halogensubstituierten, gegebenenfalls O-, N-, S-, oder P-Atome enthaltenden Kohlenwasserstoffrest mit 2 bis 10 Kohlenstoffatomen,
**b** Werte von 0,003 bis 2 bedeuten, mit der Maßgabe, dass 1.5<(**a**+**b**)<3.0, dass pro Molekül durchschnittlich mindestens zwei aliphatisch ungesättigte Reste **R**^{**2**} enthalten sind und dass die bei 25°C bestimmte Viskosität des Diorganopolysiloxans (A) mindestens 100 Pa.s betragt,
(B) Füllstoff, der ausgewählt wird aus Füllstoff (B1) mit einer spezifischen Oberfläche von mindestens 50 m²/g, Aluminiumhydroxid (B2) und deren Gemischen,
(C) Organohydrogenpolysiloxan der allgemeinen Formel (2)
R³ _{c}R⁴ _{d}R⁵ ₑH_{f}SiO_{(4-c-d-2e-f)/2} (2),
wobei
**R**^{**3**} einen monovalenten aliphatisch gesättigten Kohlenwasserstoffrest mit 1 bis 20 Kohlenstoffatomen,
**R**^{**4**} (a) einen gegebenenfalls halogensubstituierten monovalenten Kohlenwasserstoffrest mit 6 bis 15 Kohlenstoffatomen, welcher mindestens einen aromatischen C₆-Ring enthalt, oder (b) einen halogensubstituierten, gegebenenfalls O-, N-, S-, oder P-Atome enthaltenden gesättigten monovalenten Kohlenwasserstoffrest mit 2 bis 20 Kohlenstoffatomen,
**R**^{**5**} einen beidseitig Si-gebundenen bivalenten, gegebenenfalls halogensubstituierten, gegebenenfalls O-, N-, S-, oder P-Atome enthaltenden Kohlenwasserstoffrest mit 6 bis 20 Kohlenstoffatomen und
**c, d, e** und **f** positive Zahlen bedeuten, mit der Maßgabe, dass das Organohydrogenpolysiloxan (B) pro Molekül durchschnittlich 3 bis weniger als 20 SiH-Gruppen enthält, dass die Relationen: 0,05<100 (d+e)/(c+d+e+f)<12 erfüllt sind und dass die bei 25°C bestimmte Viskosität des Organohydrogenpolysiloxans (B) 1 mPa.s bis 100 Pa.s beträgt,
(D) Organosiliciumverbindung der allgemeinen Formel (3)
R⁷ _{g}R⁸ ₕR⁹ ᵢSiO_{(4-g-h-i)/2} (3),
und/oder deren Teilhydrolysate, wobei
**R**^{**7**} einen Wasserstoff-, Hydroxyl- oder einen gegebenenfalls halogen- oder cyanosubstituierten, gegebenenfalls O-, N-, S-, oder P-Atome enthaltenden gesättigten monovalenten Kohlenwasserstoffrest mit 1 bis 20 Kohlenstoffatomen,
**R**^{**8**} einen Vinylrest oder mindestens eine Epoxygruppe enthaltenden oder mit mindestens einer Acryloxy- oder Methacryloxygruppe substituierten, gegebenenfalls halogensubstituierte, gegebenenfalls O-, N-, S-, oder P-Atome enthaltenden monovalenten Kohlenwasserstoffrest mit 2 bis 20 Kohlenstoffatomen,
**R**^{**9**} einen über eine Si-O-C-, Si-O-N- oder Si-N-Verknüpfung an Si gebundenen hydrolysierbaren monovalenten gegebenenfalls halogensubstituierten, gegebenenfalls O-, N-, S-, oder P-Atome enthaltenden Kohlenwasserstoffrest mit 1 bis 20 Kohlenstoffatomen, mit der Maßgabe, dass gilt, 4>**g**≥0, 4>**h**>0, 4>**i**>0, 4≥(**h+i**)>0 und 4≥(**g+h+i**), und
(E) Hydrosilylierungskatalysator oder Peroxidvernetzer enthalten,
wobei die bei 25°C nach DIN 53523 Teil 3 bestimmte Mooney-Viskositat der Siliconzusammensetzungen 20 bis 200 beträgt.

2. Siliconzusammensetzungen nach Anspruch 1, bei denen als Füllstoff (B2) Aluminiumhydroxid mit einer spezifischen Oberflache von mindestens 2 m²/g, gemäß der Bestimmung nach der BET-Methode, eingesetzt wird.

3. Verfahren zur Herstellung von Siliconelastomeren, bei dem die Siliconzusammensetzungen gemäß Anspruch 1 oder 2 auf 40 bis 250°C erwärmt werden.

4. Siliconelastomere erhältlich nach dem Verfahren gemäß Anspruch 3.

5. Verfahren zum Verbinden einer Siliconzusammensetzung mit einem Substrat, bei dem die Siliconzusammensetzungen gemäß Anspruch 1 oder 2 auf das Substrat aufgebracht und anschliessend durch Erwärmen auf 40 bis 250°C vernetzt werden.

6. Verbundmaterial erhältlich nach dem Verfahren gemäß Anspruch 5.

7. Verwendung der Siliconzusammensetzungen nach Anspruch 1 oder 2 zur Herstellung von hochspannungsbeständigen Isolatoren.

## Claims

1. Self-adhesive heat-crosslinkable 1-component silicone compositions which contain
(A) a diorganopolysiloxane of the general formula (1)
R¹ ₐR² _{b}SiO_{(4-a-b)/2} (1),
in which
R¹ is a hydroxyl radical or a monovalent, optionally halogen-substituted hydrocarbon radical optionally containing O, N, S or P atoms, having 1 to 20 carbon atoms and being free of aliphatically unsaturated groups,
R² is a monovalent, aliphatically unsaturated, optionally halogen-substituted hydrocarbon radical optionally containing O, N, S or P atoms and having 2 to 10 carbon atoms,
b denotes values from 0.003 to 2, with the proviso that 1.5<(a+b)<3.0, that on average at least two aliphatically unsaturated radicals R² are present per molecule and that the viscosity of the diorganopolysiloxane (A), determined at 25°C, is at least 100 Pa.s,
(B) a filler which is selected from filler (B1) having a specific surface area of at least 50 m²/g, aluminium hydroxide (B2) and mixtures thereof,
(C) an organohydrogenpolysiloxane of the general formula (2)
R³ _{c}R⁴ _{d}R⁵ ₑH_{f}SiO_{(4-c-d-2e-f)/2} (2),
in which
R³ is a monovalent aliphatically saturated hydrocarbon radical having 1 to 20 carbon atoms,
R⁴ is (a) an optionally halogen-substituted monovalent hydrocarbon radical having 6 to 15 carbon atoms which contains at least one aromatic C₆-ring, or (b) a halogen-substituted, saturated monovalent hydrocarbon radical optionally containing O, N, S or P atoms and having 2 to 20 carbon atoms,
R⁵ is a bivalent, optionally halogen-substituted hydrocarbon radical Si-bonded at both ends, optionally containing O, N, S or P atoms and having 6 to 20 carbon atoms and
c, d, e and f denote positive numbers, with the proviso that the organohydrogenpolysiloxane (B) contains on average 3 to less than 20 SiH groups per molecule, that the relationships: 0.05<100 (d+e)/(c+d+e+f)<12 are fulfilled and that the viscosity of the organohydrogenpolysiloxane (B), determined at 25°C, is 1 mPa.s to 100 Pa.s,
(D) an organosilicon compound of the general formula (3)
R⁷ _{g}R⁸ ₕR⁹ ᵢSiO_{(4-g-h-i)/2} (3)
and/or its partial hydrolysis products, in which
R⁷ is a hydrogen radical, a hydroxyl radical or an optionally halogen- or cyano-substituted, monovalent saturated hydrocarbon radical optionally containing O, N, S or P atoms and having 1 to 20 carbon atoms,
R⁸ is a vinyl radical or an optionally halogen-substituted monovalent hydrocarbon radical containing at least one epoxy group or substituted by at least one acryloyloxy or methacryloyloxy group, optionally containing O, N, S or P atoms and having 2 to 20 carbon atoms,
R⁹ is a hydrolysable monovalent optionally halogen-substituted hydrocarbon radical bonded to Si via an Si-O-C-, Si-O-N- or Si-N-link, optionally containing O, N, S or P atoms and having 1 to 20 carbon atoms, with the proviso that 4>g≥0, 4>h>0, 4>i>0, 4≥(h+1)>0 and 4≥(g+h+i), and
(E) a hydrosilylation catalyst or peroxide crosslinking agent,
the Mooney viscosity of the silicone composition, determined at 25°C according to DIN 53523 Part 3, being 20 to 200.

2. Silicone compositions according to Claim 1, in which the filler (B2) used is aluminium hydroxide having a specific surface area of at least 2 m²/g, according to determination by the BET method.

3. Process for the preparation of silicone elastomers, in which the silicone compositions according to Claim 1 or 2 are heated to 40 to 250°C.

4. Silicone elastomers obtainable by the process according to Claim 3.

5. Process for bonding a silicone composition to a substrate, in which the silicone compositions according to Claim 1 or 2 are applied to the substrate and then crosslinked by heating to 40 to 250°C.

6. Composite material obtainable by the process according to Claim 5.

7. Use of the silicone compositions according to Claim 1 or 2 for the production of insulators resistant to high voltage.

## Revendications

1. Compositions de silicone à un composant, auto-adhésives, réticulables par chauffage, qui contiennent
(A) un diorganopolysiloxane de formule générale (1)
R¹ ₐR² _{b}SiO_{(4-a-b)/2} (1),
dans laquelle
R¹ signifie un radical hydroxyle ou un radical hydrocarboné monovalent, le cas échéant halogénosubstitué, contenant le cas échéant des atomes O, N, S ou P comprenant 1 à 20 atomes de carbone, qui est exempt de groupes aliphatiquement insaturés,
R² signifie un radical hydrocarboné monovalent, aliphatiquement insaturé, le cas échéant halogénosubstitué, contenant le cas échéant des atomes O, N, S ou P comprenant 2 à 10 atomes de carbone,
b vaut 0,003 à 2
à condition que 1,5<(a+b)<3,0, que par molécule, en moyenne au moins deux radicaux aliphatiquement insaturés R² soient contenus et que la viscosité déterminée à 25°C du diorganopolysiloxane (A) soit d'au moins 100 Pa.s,
(B) une charge, choisie parmi la charge (B1) présentant une surface spécifique d'au moins 50 m²/g, l'hydroxyde d'aluminium (B2) et leurs mélanges,
(C) un organohydrogénopolysiloxane de formule générale (2)
R³ _{c}R⁴ _{d}R⁵ ₑH_{f}SiO_{(4-c-d-2e-f)/2} (2),
où
R³ signifie un radical hydrocarboné monovalent aliphatiquement saturé comprenant 1 à 20 atomes de carbone,
R⁴
(a) signifie un radical hydrocarboné le cas échéant halogénosubstitué monovalent comprenant 6 à 15 atomes de carbone, qui contient au moins un cycle aromatique en C₆ ou
(b) signifie un radical hydrocarboné halogénosubstitué, contenant le cas échéant des atomes O, N, S ou P, saturé, monovalent, comprenant 2 à 20 atomes de carbone,
R⁵ signifie un radical hydrocarboné lié des deux côtés par Si, divalent, le cas échéant halogénosubstitué, contenant le cas échéant des atomes O, N, S ou P comprenant 6 à 20 atomes de carbone et
c, d, e et f signifient des nombres positifs, à condition que l'organohydrogénopolysiloxane (B) contienne par molécule en moyenne 3 à moins de 20 groupes SiH, que les relations : 0,05<100 (d+e)/(c+d+e+f)<12 soient satisfaites et que la viscosité déterminée à 25°C de l'organohydrogénopolysiloxane (B) soit de 1 mPa.s à 100 Pa.s,
(D) un composé organosilicié de formule générale (3)
R⁷ _{g}R⁸ ₕR⁹ ᵢSiO_{(4-g-h-i)/2} (3),
et/ou ses hydrolysats partiels, dans laquelle
R⁷ signifie un radical hydrogène, hydroxyle ou un radical hydrocarboné le cas échéant halogénosubstitué ou cyanosubstitué, contenant le cas échéant des atomes O, N, S ou P, saturé, monovalent comprenant 1 à 20 atomes de carbone,
R⁸ signifie un radical vinyle ou un radical hydrocarboné contenant au moins un groupe époxy ou substitué par au moins un groupe acryloxy ou méthacryloxy, le cas échéant halogénosubstitué, contenant le cas échéant des atomes O, N, S ou P, monovalent, comprenant 2 à 20 atomes de carbone,
R⁹ signifie un radical hydrocarboné lié à Si par une liaison Si-O-C-, Si-O-N- ou Si-N-, hydrolysable, monovalent, le cas échéant halogénosubstitué, contenant le cas échéant des atomes O, N, S ou P comprenant 1 à 20 atomes de carbone,
à condition que 4>g≥0, 4>h>0, 4>1>0, 4≥(h+i)>0 et 4≥(g+h+i), et
(E) un catalyseur d'hydrosilylation ou un réticulant peroxyde,
la viscosité Mooney déterminée à 25°C selon la norme DIN 53523 partie 3 des compositions de silicone étant de 20 à 200.

2. Compositions de silicone selon la revendication 1, dans lesquelles on utilise comme charge (B2) de l'hydroxyde d'aluminium avec une surface spécifique d'au moins 2 m²/g selon la détermination selon le procédé BET.

3. Procédé pour la préparation d'élastomères de silicone, dans lequel les compositions de silicone selon la revendication 1 ou 2 sont chauffées à 40 jusqu'à 250°C.

4. Elastomères de silicone pouvant être obtenus selon le procédé selon la revendication 3.

5. Procédé pour fixer une composition de silicone sur un substrat, dans lequel les compositions de silicone selon la revendication 1 ou 2 sont appliquées sur le substrat et ensuite réticulées par chauffage à 40 jusqu'à 250°C.

6. Matériau composite pouvant être obtenu selon le procédé selon la revendication 5.

7. Utilisation des compositions de silicone selon la revendication 1 ou 2 pour la préparation d'isolants résistants à la haute tension.
